# EUROPÄISCHE PATENTSCHRIFT

(11) **EP 3 156 269 B1**
(45) Veröffentlichungstag und Bekanntmachung des Hinweises auf die Patenterteilung: **09.12.2020**
(21) Anmeldenummer: 16192547.4
(22) Anmeldetag: 06.10.2016
(51) Int. Cl.: B60G 11/12, F16F 1/30, F16F 1/368, F16F 1/38, F16C 33/20

(54) **BEFESTIGUNGSSCHÄKEL ZUR BEFESTIGUNG EINER BLATTFEDER AN EINEM FAHRZEUGAUFBAU**
FIXING SHACKLE FOR FASTENING LEAF SPRINGS ON A CHASSIS
MANILLE DE FIXATION D'UN RESSORT A LAMES SUR LA CARROSSERIE DE VÉHICULES

(30) Priorität: 12.10.2015 DE 102015117349
(43) Veröffentlichungstag der Anmeldung: 19.04.2017
(73) Patentinhaber: Benteler Automobiltechnik GmbH, 33102 Paderborn (DE); SGL Carbon SE, 65201 Wiesbaden (DE)
(72) Erfinder: Drabon, Rodscha, 33154 Salzkotten (DE); Howe, Torsten, 32791 Lage (DE); Rochell, Dirk, 33106 Paderborn (DE)
(74) Vertreter: Patentship Patentanwaltsgesellschaft mbH

(56) Entgegenhaltungen:
- EP-A1- 1 911 613
- JP-A- S61 157 847
- KR-A- 20050 006 753
- US-A1- 2003 057 622
- US-A1- 2003 098 565

## Beschreibung

Die vorliegende Erfindung betrifft die Befestigung einer Blattfeder in einem Fahrzeug.

Die Offenlegungsschrift US 2003/098565 A1 beschreibt einen Befestigungsschäkel nach dem Oberbegriff des Anspruchs 1.

Die Offenlegungsschrift US 2003/057622 A1 beschreibt zwei Schäkelarme, wobei an einem jeweiligen Ende der beiden Schäkelarme ein Lager befestigt ist. An dem Lager ist eine Blattfeder befestigt.

Zur gefederten Aufhängung eines Rades in einem Fahrzeug kann eine Blattfeder eingesetzt werden, welche sich in Fahrtrichtung bzw. in Fahrzeuglängsrichtung erstreckt. Eine Blattfeder wird üblicherweise aus einem Faserverbundkunststoff hergestellt und umfasst an dem jeweiligen Blattfederende ein Elastomerlager zur Befestigung der Blattfeder an einem Fahrzeugaufbau, beispielsweise an einem Fahrzeugrahmen oder an einer Karosserie. Im Mittenbereich ist die Blattfeder üblicherweise über eine Mittenanbindung mit einer Starrachse des Fahrzeugs verbunden.

Die Blattfeder wird mit dem Fahrzeugaufbau oft über einen Schäkel verbunden, um einen Längsausgleich zu ermöglichen. Der Schäkel ist dabei fest mit dem Elastomerlager der Blattfeder verbunden. Das Elastomerlager der Blattfeder ist vorgesehen, um eine kardanische Bewegung der Blattfederenden oder um eine Torsionskraft der Blattfeder zumindest teilweise aufzunehmen. Unter Einfluss einer Seitenkraft in Fahrzeugquerrichtung verbiegt sich die Blattfeder jedoch in Fahrzeugquerrichtung, wodurch das mit der Blattfeder gekoppelte Rad in Fahrzeugquerrichtung verschoben werden kann. Die Verbiegung der Blattfeder führt insbesondere zu einer seitlichen Verformung des Elastomerlagers der Blattfeder, welche die Fahrdynamik beeinflusst und unerwünscht ist. Zur Reduktion der Verbiegung der Blattfeder in Fahrzeugquerrichtung können beispielsweise die Maße der Blattfeder erhöht werden. Dies ist jedoch mit einem erhöhten Fahrzeuggewicht sowie mit erhöhten Herstellungskosten verbunden.

Es ist daher die Aufgabe der vorliegenden Erfindung, ein Befestigungskonzept zur Befestigung einer Blattfeder an einem Fahrzeugaufbau eines Fahrzeugs mit verbesserter Fahrdynamik zu schaffen.

Diese Aufgabe wird durch die Merkmale der unabhängigen Patentansprüche gelöst. Vorteilhafte Weiterbildungsformen sind Gegenstand der abhängigen Ansprüche, der Beschreibung sowie der beigefügten Figuren.

Die vorliegende Erfindung basiert auf der Erkenntnis, dass die obige Aufgabe durch einen Befestigungsschäkel gelöst werden kann, welcher ein Gleitlager aufweist, über das der Befestigungsschäkel an einem Fahrzeugaufbau befestigt werden kann. Das Gleitlager ermöglicht das Verschwenken des Schäkels an dem Fahrzeugaufbau in Längsrichtung der Blattfeder, wodurch zumindest eine Komponente der kardanischen Bewegung der Blattfeder aufgenommen werden kann.

Der Befestigungsschäkel kann beispielsweise zur Befestigung einer Blattfeder an einem Fahrzeugaufbau verwendet werden, welche weiterhin ein Elastomerlager bzw. ein Gummilager aufweisen kann, um eine Torsionskraft der Blattfeder aufgrund einer Verformung des Elastomers in dem Elastomerlager aufzunehmen. Das Gleitlager des Befestigungsschäkels weist bevorzugt eine höhere kardanische Steifigkeit gegenüber dem Elastomerlager der Blattfeder auf, wodurch die Seitensteifigkeit des resultierenden Blattfedersystems erhöht wird. Dies führt dazu, dass eine Verschiebung eines mit der Blattfeder gekoppelten Rades in Fahrzeugquerrichtung um bis zu 15% bis 20% reduziert werden kann. Bei einer Beaufschlagung der Blattfeder mit einer Seitenkraft wird durch den Befestigungsschäkel aufgrund dessen Seitensteifigkeit erreicht, dass sich die Blattfeder in dem Mittenbereich weniger verbiegen kann. Weist das Gleitlager eine geringere Verdrehsteifigkeit als das Elastomerlager der Blattfeder auf, so kann eine deutliche Erhöhung der kardanischen Steifigkeit bei gleichzeitiger Reduktion der Verdrehfestigkeit erreicht werden. Dadurch kann die Fahrdynamik des Fahrzeugs bei gleichbleibenden Maßen der Blattfeder verbessert werden.

Gemäß einem ersten Aspekt betrifft die Erfindung einen Befestigungsschäkel zur Befestigung einer Blattfeder an einem Fahrzeugaufbau eines Fahrzeugs, mit einem ersten Lagerende, welches an dem Fahrzeugaufbau befestigbar ist, wobei das erste Lagerende eine Außenhülse, eine Innenhülse und ein hülsenförmiges Kunststoffgleitlager aufweist, wobei das hülsenförmige Kunststoffgleitlager in der Außenhülse angeordnet und in der Außenhülse gleitbar gelagert ist, und wobei die Innenhülse mit dem hülsenförmigen Kunststoffgleitlager fest verbunden ist, einem zweiten Lagerende, an welchem die Blattfeder lagerbar ist; und zumindest einem Schäkelkörper, welcher das erste Lagerende und das zweite Lagerende verbindet.

Durch die feste Verbindung zwischen einer Außenwandung der Innenhülse und einer Innenwandung des hülsenförmigen Kunststofflagers sind sowohl das Kunststoffgleitlager als auch die Innenhülse im Inneren der Außenhülse drehbar gelagert. Bevorzugt weist der Befestigungsschäkel eine Seitensteifigkeit auf, welche bevorzugt höher ist als die Seitensteifigkeit des Elastomerlagers der Blattfeder.

Die Anordnung des Kunststoffgleitlagers in dem Befestigungsschäkel ermöglicht zudem eine genauere und definierte Einstellung einer dynamischen Radspur, insbesondere bei einer Berücksichtigung der Dynamik der Blattfeder beim Ein- oder Ausfedern.

Das hülsenförmige Kunststoffgleitlager ist bevorzugt in der Außenhülse derart gelagert, dass dessen Oberfläche an einer Innenwandung gleitet.

Gemäß einer Ausführungsform ist das hülsenförmige Kunststoffgleitlager durch eine einstückige Kunststoffhülse gebildet. Die einstückige Kunststoffhülse kann beispielsweise durch einen Kunststoffspritzprozess realisiert werden, bei dem Kunststoff zwischen die Innenhülse und die Außenhülse eingespritzt wird. Dadurch wird der Vorteil einer besonderen Herstellungseffizienz erreicht.

Gemäß einer Ausführungsform ist an dem zweiten Lagerende ein Elastomerlager der Blattfeder lagerbar und ist ein Elastizitätswert des hülsenförmigen Kunststoffgleitlagers geringer als ein Elastizitätswert eines Elastomers des Elastomerlagers. Mit anderen Worten ausgedrückt ist das hülsenförmige Kunststoffgleitlager steifer bzw. weniger elastisch als das in dem Elastomerlager der Blattfeder eingesetzte Elastomer.

Gemäß einer Ausführungsform ist das hülsenförmige Kunststoffgleitlager aus Kunststoff gebildet, welcher ein tribologisches Polymer enthält. Durch die Verwendung des tribologischen Polymers, das oft auch als Tribopolymer bezeichnet wird, werden die Steifigkeit, Härte und Verschleißfestigkeit des Kunststoffgleitlagers erhöht.

Gemäß einer Ausführungsform ist das hülsenförmige Kunststoffgleitlager aus einem Faserverbundstoff gebildet, welcher ein Polymer, insbesondere ein tribologisches Polymer, Verstärkungsfasern, insbesondere Glasfasern, und optional einen Festschmierstoff enthält. Durch die Verwendung des Faserverbundstoffes wird die Steifigkeit des hülsenförmigen Kunststoffgleitlagers erhöht. Der eingebettete Festschmierstoff wird durch das Kunststoffgleitlager nach außen abgegeben, wodurch eine Reibung zwischen einer Außenoberfläche des hülsenförmigen Kunststoffgleitlagers und einer Innenwandung der Außenhülse reduziert wird. Das hülsenförmige Kunststoffgleitlager kann zudem günstig realisiert werden.

Gemäß einer Ausführungsform ist das hülsenförmige Kunststoffgleitlager mit der Innenhülse, insbesondere mit einer Außenwandung der Innenhülse, stoffschlüssig verbunden. Die stoffschlüssige Verbindung kann durch direktes Aufspritzen des Kunststoffs auf die Außenwand der Innenhülse vorteilhaft realisiert werden. Zusätzlich kann ein Kraft-/Formschlussanbindung durch Rändelung realisiert werden.

Gemäß einer Ausführungsform weist der Befestigungsschäkel ferner einen Lagerbolzen auf, welcher die Innenhülse durchsetzt. Durch den Lagerbolzen kann der Befestigungsschäkel an dem Fahrzeugaufbau befestigt werden. Der Lagerbolzen kann beispielsweise aus Metall, insbesondere aus Stahl, gefertigt sein.

Gemäß einer Ausführungsform ist die Außenhülse, insbesondere die Außenwandung der Außenhülse, fest mit dem Schäkelkörper verbunden oder mit dem Schäkelkörper einteilig, beispielsweise als Gussteil, gebildet.

Gemäß einer Ausführungsform ist an dem zweiten Lagerende ein Blattfederhalter zur Halterung der Blattfeder angeordnet. Die Blattfeder kann endseitig in den Blattfederhalter eingeschoben werden und darin endseitig gehalten werden. Der Blattfederhalter kann an dem zweiten Lagerende mittels eines Elastomerlagers gehalten sein.

Gemäß einer Ausführungsform umfasst das zweite Lagerende eine Lagerhülse, welche durch einen Lagerbolzen durchsetzbar ist, oder wobei der Schäkelkörper an dem zweiten Lagerende einen ersten Schäkelsteg und einen zweiten Schäkelsteg aufweist, wobei der erste Schäkelsteg und der zweite Schäkelsteg jeweils einen Durchzug aufweisen, welcher durch einen Lagerbolzen durchsetzbar ist.

Gemäß einer Ausführungsform ist das erste Lagerende in einer Querrichtung der Blattfeder starr oder verschieblich, insbesondere gering lateral verschieblich.

Gemäß einem zweiten Aspekt betrifft die Erfindung eine Blattfederanordnung mit einer Blattfeder und dem erfindungsgemäßen Befestigungsschäkel, wobei ein Blattfederende an dem zweiten Lagerende des Befestigungsschäkels drehbar gelagert ist, und wobei das erste Lagerende des Befestigungsschäkels an einem Fahrzeugaufbau befestigt ist.

Durch die Lagerung der Blattfeder des Befestigungsschäkels wird zudem der Vorteil einer genaueren Einstellung einer dynamischen Radspur erreicht.

Gemäß einer Ausführungsform sind das erste Längsblattfedelager und das zweite Längsblattfedelager Elastomerlager. Durch die Elastizität der Elastomerlager wird die Aufnahme von kardanischen Kräften ermöglicht.

Gemäß einer Ausführungsform ist eine Außenwandung der Innenhülse mit einer Rändelung versehen. Dadurch kann die Haftung zwischen der Innenhülse und dem hülsenförmigen Kunststoffgleitlager erhöht werden.

Gemäß einem dritten Aspekt betrifft die Erfindung ein Verfahren zum Herstellen eines Befestigungsschäkels zur Befestigung einer Blattfeder an einem Fahrzeugaufbau eines Fahrzeugs, mit Bereitstellen eines Grundschäkels mit einem ersten Lagerende mit einer Außenhülse, einem zweiten Lagerende und einem Schäkelkörper, welcher das erste Lagerende und das zweite Lagerende verbindet, Einführen einer Innenhülse in die Außenhülse und Einspritzen eines Kunststoffs zwischen eine Außenwandung der Innenhülse und eine Innenwandung der Außenhülse, um ein hülsenförmiges Kunststoffgleitlager zu erzeugen. Dadurch wird der Vorteil erreicht, dass der Befestigungsschäkel besonders herstellungseffizient realisiert werden kann.

Gemäß einer Ausführungsform wird die Außenhülse oder der Grundschäkel vor oder nach dem Einführen der Innenhülse in ein Spritzwerkzeug eingelegt.

Gemäß einer Ausführungsform umfasst das Verfahren das Auflösen einer Stoffverbindung zwischen der Innenwandung der Außenhülse und dem hülsenförmigen

Kunststoffgleitlager, um das hülsenförmige Kunststoffgleitlager in der Außenhülse gleitbar zu lagern. Die Auflösung der Stoffverbindung kann beispielsweise mechanisch und/oder durch Zuhilfenahme eines Trennmittels, mit dem die Innenwandung der Außenhülse benetzt wird, um die Stoffverbindung zu verhindern oder zu schwächen, bewirkt werden. Die Auflösung kann ferner durch axiales Schrumpfen des Kunststoffes infolge der Abkühlung realisiert bzw. unterstützt werden.

Der Kunststoff kann beispielsweise einer der vorgenannten Kunststoffe sein.

Eine äquivalente Wirkung wird erreicht, wenn die Innenhülse in dem Kunststoffgleitlager drehbar gelagert ist und das Kunststoffgleitlager fest mit der Außenhülse, insbesondere mit der Innenwandung der Außenhülse verbunden ist.

Die vorliegende Erfindung betrifft somit gemäß einem vierten Aspekt einen weiteren Befestigungsschäkel zur Befestigung einer Blattfeder an einem Fahrzeugaufbau eines Fahrzeugs, mit einem ersten Lagerende, welches an dem Fahrzeugaufbau befestigbar ist, wobei das erste Lagerende eine Außenhülse, eine Innenhülse und ein hülsenförmiges Kunststoffgleitlager aufweist, und wobei im Unterschied zu dem Befestigungsschäkel gemäß des ersten und zweiten Aspekts die Innenhülse in dem hülsenförmigen Kunststoffgleitlager gleitbar gelagert ist und das hülsenförmige Kunststoffgleitlager mit der Außenhülse fest verbunden ist.

Die Herstellung des weiteren Befestigungsschäkels entspricht der Herstellung des Befestigungsschäkels mit dem Unterschied, dass nach dem Einspritzen des Kunststoffs die Stoffverbindung zwischen der Innenhülse und dem Kunststofflager aufgelöst wird, wobei die Innenhülse mit einem Trennmittel benetzt werden kann, um eine Verbindung mit dem eingespritzten Kunststoff zu verhindern oder zu schwächen.

Die weiteren Merkmale des weiteren Befestigungsschäkels und dessen Herstellung entsprechen den Merkmalen des Befestigungsschäkels.

Weitere Ausführungsformen der Erfindung werden Bezug nehmend auf die beiliegenden Zeichnungen näher erläutert. Es zeigen:
- Fig. 1a, 1b, 1c: Ansichten eines Befestigungsschäkels;
- Fig. 2a, 2b: Ansichten des Befestigungsschäkels; und
- Fig. 3: Herstellung des Befestigungsschäkels.

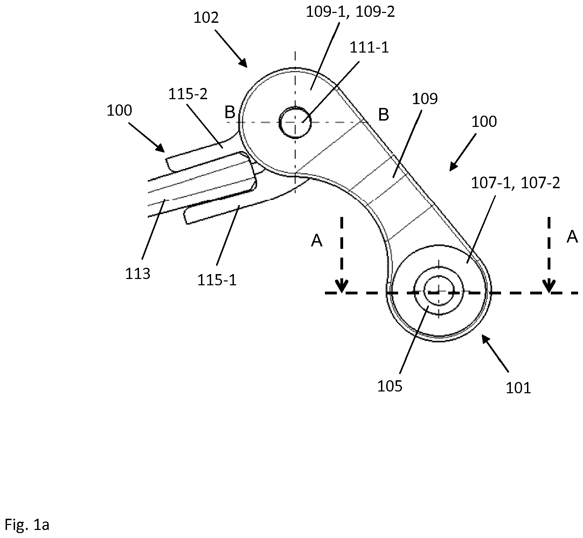

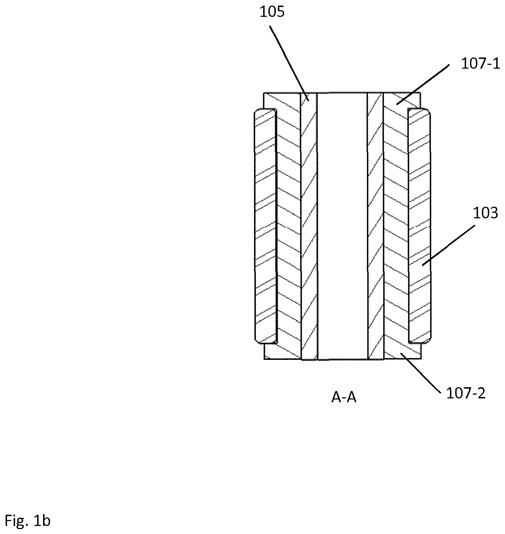

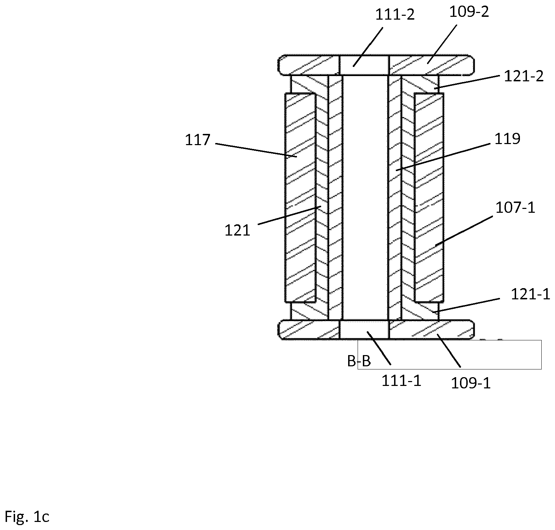

In den Fig. 1a, 1b und 1c sind Ansichten des Befestigungsschäkels 100 gemäß einer Ausführungsform dargestellt.

Fig. 1a zeigt den Befestigungsschäkel 100 in einer Seitendarstellung. Der Befestigungsschäkel 100 hat ein erstes Lagerende 101 und ein zweites Lagerende 102. Das erste Lagerende 101 ist beispielsweise an einem Fahrzeugaufbau eines in Fig. 1 nicht dargestellten Fahrzeugs befestigbar. Der Befestigungsschäkel 100 umfasst ferner einen Schäkelkörper 109, welcher das erste Lagerende 101 und das zweite Lagerende 102 verbindet.

Fig. 1b zeigt einen Schnitt durch das erste Lagerende 101. Das erste Lagerende 101 umfasst eine Außenhülse 103, eine in der Außenhülse 103 angeordnete Innenhülse 105 sowie ein hülsenförmiges Kunststoffgleitlager 107, das zwischen der Innenhülse 105 und der Außenhülse 103 angeordnet ist. Die Außenhülse 103 ist kürzer als die Innenhülse 105.

Das hülsenförmige Kunststoffgleitlager 107 weist gemäß einer optionalen Ausführungsform seitlich jeweils einen umlaufenden Seitenkragen 107-1, 107-2 auf, welcher jeweils einen seitlichen Anschlag bildet und die Außenhülse 103 seitlich begrenzt. Die Außenhülse 103 kann daher kürzer als die Innenhülse 107 ausgebildet sein.

Gemäß einer Ausführungsform ist das hülsenförmige Kunststoffgleitlager 107 in der Außenhülse 103 gleitbar gelagert. Mit anderen Worten ausgedrückt gleitet eine Außenwandung des hülsenförmigen Kunststoffgleitlagers 107 an einer Innenwandung der Außenhülse 103. Dabei ist die Innenhülse 105 mit dem hülsenförmigen Kunststoffgleitlager 107 fest, beispielsweise stoffschlüssig oder formschlüssig verbunden. Somit dreht sich die Innenhülse 105 zusammen mit dem hülsenförmigen Kunststoffgleitlager 107 in der Außenhülse 103.

Die Außenhülse 103 ist bevorzugt fest, beispielsweise stoffschlüssig, mit dem Schäkelkörper 109 verbunden.

Die Außenhülse 103 und der Schäkelkörper 109 können jedoch ein einstückiges Bauteil bilden.

Die Außenhülse 103 und der Schäkelkörper 109 sind bevorzugt aus demselben Material, insbesondere Stahl oder Aluminium oder einer Aluminium-Legierung, geformt.

Der Schäkelkörper 109 erstreckt sich somit von der Außenhülse 103 zum zweiten Lagerende 102.

Die Innenhülse 105 kann aus einem gerollten Materialzuschnitt, insbesondere Blechzuschnitt oder Stahlzuschnitt, gefertigt sein. Die Innenhülse 105 kann jedoch als ein Rohr hülsenartig bzw. rohrartig mit einer im Umfang geschlossenen Wandung gebildet sein.

Das erste Lagerende 101 wird bevorzugt an einem nicht dargestellten Fahrzeugaufbau befestigt. Hierzu kann der Fahrzeugaufbau Seitenschenkel mit Durchzügen aufweisen, welche durch den nicht dargestellten Lagerbolzen durchsetzbar sind. Die Seitenschenkel des Fahrzeugaufbaus können die Innenhülse 105 seitlich aufnehmen bzw. halten. Der Lagerbolzen durchsetzt dabei die Innenhülse 105. Die Seitenkragen 107-1 und 107-2 liegen dabei an dem Fahrzeugaufbau flächig an.

Das zweite Lagerende 102 ist vorgesehen, eine beispielhaft dargestellte Blattfeder 113 zu halten. Hierzu ist ein Blattfederhalter 115 mit zwei Halteschenkeln 115-1, 115-2 vorgesehen, welche einen Aufnahmeraum begrenzen, in welchen ein Blattfederende der Blattfeder 113 einschiebbar ist. Der Blattfederhalter 115 kann ein integrales Element des zweiten Lagerendes 115 oder ein separates Bauteil sein, das durch das Lagerende 115 halterbar ist.

Fig. 1c zeigt einen Schnitt durch das zweite Lagerende 102.

Das zweite Lagerende 102 umfasst eine Außenhülse 117, eine in der Außenhülse 117 angeordnete Innenhülse 119 sowie ein Kunststoffteil 121, das zwischen der Innenhülse 119 und der Außenhülse 117 angeordnet ist.

Der Schäkelklörper 109 geht an dem zweiten Lagerende 102 in zwei Schäkelstege 109-1 und 109-2 über, welche den Schäkelklörper 109 seitlich verlängern. Der Schäkelklörper 109 kann beispielsweise in die Schäkelstege 109-1 und 109-2 aufgabeln. In den Schäkelstegen 109-1 und 109-2 sind Durchzüge 111-1, 111-2 gebildet und für die Aufnahme eines Lagerbolzens vorgesehen.

Die Innenhülse 119, die Außenhülse 117 sowie das Kunststoffgleitlager 121 sind zwischen den Schäkelstegen 109-1 und 109-2 angeordnet und mittels des nicht dargestellten Lagerbolzens gehalten. Der Lagerbolzen durchsetzt die Durchzüge 111-1 und 111-2 sowie die Innenhülse 119.

Das Kunststoffteil 121 weist gemäß einer optionalen Ausführungsform seitlich jeweils einen umlaufenden Seitenkragen 121-1, 121-2 auf, welcher jeweils einen Anschlag bildet und die Außenhülse 117 seitlich begrenzen.

Das Kunststoffteil 121 ist gemäß einer Ausführungsform aus demselben Material wie das hülsenförmige Kunststoffgleitlager 121 aufgebaut und formt ebenfalls ein hülsenförmiges Kunststoffgleitlager.

Gemäß einer Ausführungsform sind das erste Lagerende 101 und das zweite Lagerende 102 identisch ausgeführt.

Gemäß einer Ausführungsform ist das Kunststoffteil 121 aus einem Elastomer gefertigt. In diesem Fall bilden die Außenhülse 117, die Innenhülse 119 sowie das Kunststoffteil 121 ein Elastomerlager. Gemäß einer Ausführungsform ist das Elastomerlager ein Element des zweiten Lagerendes 102.

Gemäß einer weiteren Ausführungsform kann der Blattfederhalter 115 Seitenstege aufweisen, welche in einen Raum zwischen den Schäkelstegen 109-1 und 109-2 einschiebbar ist. Die Seitenstege des Blattfederhalters 115 werden durch die Schäkelstege 109-1 und 109-2 beispielsweise seitlich geklemmt.

Das Elastomerlager kann jedoch in der Blattfeder 113 gebildet sein.

Gemäß einer Ausführungsform ist das hülsenförmige Kunststoffteil 121 in der Außenhülse 117 gleitbar gelagert. Daher gleitet eine Außenwandung des hülsenförmigen Kunststoffgleitlagers 121 an einer Innenwandung der Außenhülse 117. Bevorzugt ist die Innenhülse 119 mit dem Kunststoffteil 121 fest, beispielsweise stoffschlüssig verbunden. Somit dreht sich die Innenhülse 119 zusammen mit dem hülsenförmigen Kunststoffgleitlager 121 in der Außenhülse 117. Die Innenhülse 119 und das hülsenförmige Kunststoffteil 121 können jedoch nicht miteinander verbunden und somit bezüglich einander rotierbar gelagert sein.

In dem in Fig. 1c dargestellten Ausführungsbeispiel sind die Schäkelstege 109-1 und 109-2 beispielhaft seitlich an der Innenhülse 119 angeordnet. Die Außenhülse 117 kann kürzer als die Innenhülse 119 sein. Der Lagerbolzen kann beispielsweise zur Lagerung des Halters 115 der Blattfeder 113 vorgesehen sein.

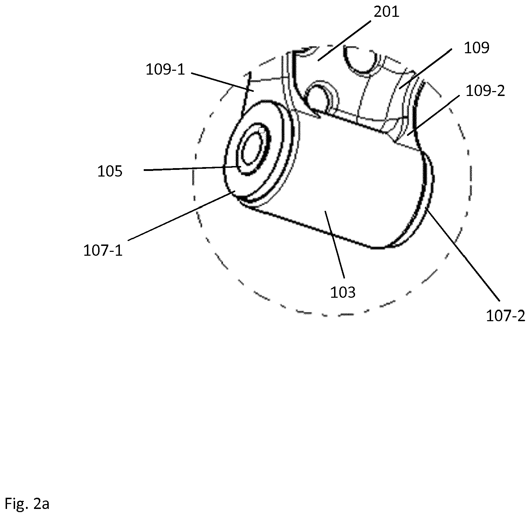

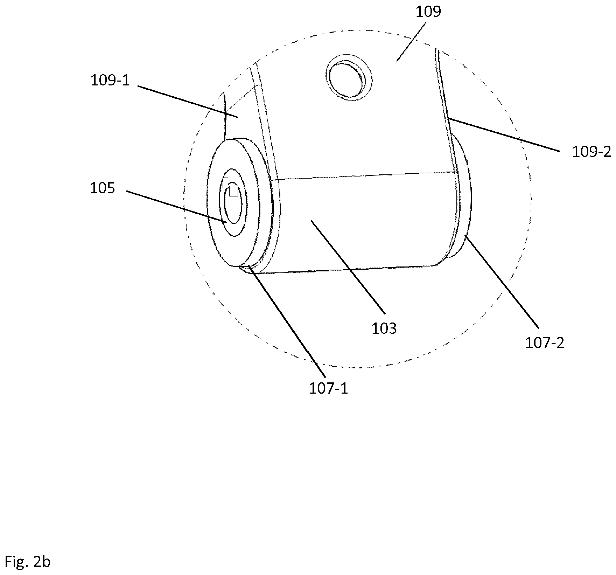

In den Fig. 2a und 2b sind Ansichten des ersten Lagerendes 101 dargestellt. Der Schäkelkörper umfasst eine Rückwand 201, welche die Schäkelstege 109-1 und 109-2 verbindet und mit diesen stoffschlüssig verbunden oder einstückig geformt sein kann. Die Schäkelstege 109-1 und 109-2 gehen mit der Rückwand 201 in die Außenhülse 103 über. Die Rückwand 201 ist mit der Außenhülse 103 verbunden oder einstückig geformt. Die Rückwand 201 dient zur Verstärkung des Befestigungsschäkels 100.

Der Befestigungsschäkel 100 kann besonders herstellungseffizient hergestellt werden, indem das hülsenförmige Kunststoffgleitlager 107 beispielsweise mittels eines Kunststoffspritzverfahrens zwischen die Innenhülse 105 und die Außenhülse 103 eingespritzt wird.

Zum Herstellen des Befestigungsschäkels 100 kann ein Herstellungsverfahren mit Bereitstellen eines Grundschäkels mit einem ersten Lagerende 101 mit einer Außenhülse 103 einem zweiten Lagerende 102 und einem Schäkelkörper 109, welcher das erste Lagerende 101 und das zweite Lagerende 102 verbindet, Einführen einer Innenhülse 105 in die Außenhülse 103 und Einspritzen eines Kunststoffs zwischen eine Außenwandung der Innenhülse 105 und eine Innenwandung der Außenhülse 103 um ein hülsenförmiges Kunststoffgleitlager 107 zu erzeugen, durchgeführt werden.

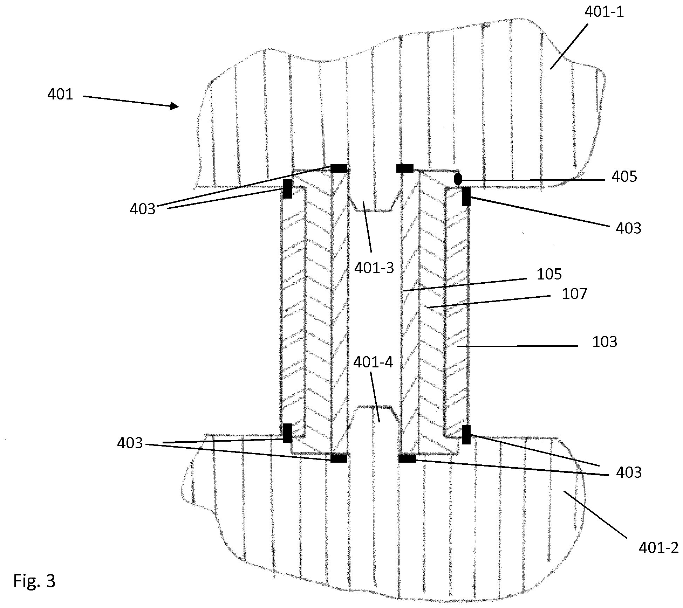

Das Herstellungsverfahren kann beispielsweise mittels des in Fig. 3 schematisch dargestellten Kunststoffspritzwerkzeugs 401 durchgeführt werden.

Fig. 3 zeigt eine beispielhafte Anordnung des Befestigungsschäkels 100 als Grundschäkel in dem Kunststoffspritzwerkzeug 401, das zur Herstellung des Befestigungsschäkels 100 verwendet werden kann.

Das Kunststoffspritzwerkzeug 401 umfasst ein Kunststoffspritzwerkzeugoberteil 401-1 sowie ein Kunststoffspritzwerkzeugunterteil 401-2. Der Grundschäkel wird zwischen dem Kunststoffspritzwerkzeugoberteil 401-1 und dem Kunststoffspritzwerkzeugunterteil 401-2 angeordnet.

Das Kunststoffspritzwerkzeugoberteil 401-1 und das Kunststoffspritzwerkzeugunterteil können jeweils eine Fixierhilfe 401-3 und 401-3 aufweisen, welche in die Innenhülse 105 zumindest teilweise eingeführt werden. Somit wird die Innenhülse 105 in der Außenhülse 103 in der Einbaulage positioniert.

Das Kunststoffspritzwerkzeug 401 umfasst ferner optionale Werkzeugabdichtungen 403, sowie einen optionalen Anguss 405.

In einem Herstellungsschritt kann zwischen die Innenhülse 105 und die Außenhülse 103 Kunststoff eingespritzt werden, welcher das hülsenförmige Kunststoffgleitlager 107 nach Aushärtung formt. Der Kunststoff kann beispielsweise ein tribologisches Polymer enthalten, dem Verstärkungsfasern, beispielsweise Glasfaser, beigemischt sind. Zusätzlich kann das eingespritzte Kunststoffmaterial einen Festschmierstoff aufweisen. Dadurch wird die Steifigkeit des resultierenden hülsenförmigen Kunststoffgleitlagers 107 erhöht. Bevorzugt ist das hülsenförmige Kunststoffgleitlager 107 weniger elastisch als ein Elastomer, das in einem Elastomerlager einer Blattfeder eingesetzt wird.

Optional kann ein anderer Kunststoff, beispielsweise ein duroplastischer Kunststoff, eingespritzt werden, dessen Elastizität geringer als die Elastizität eines Elastomers ist.

Der Kunststoff soll bevorzugt nur an Innenhülse 105 fest haften. Hierzu kann die Außenwandung der Innenhülse 105 mit einer Rändelung versehen sein, wodurch die Haftung der Kunststoffgleitschicht an der Innenhülse 105 fester als an der Außenhülse 103 wird. Gemäß einer Ausführungsform kann ein Trennmittel zwischen dem Kunststoff und der Innenwandung der Außenhülse 103 eingesetzt werden.

Nach dem Abkühlen schrumpft der Kunststoff axial und/oder radial, wodurch die Haftung zwischen dem Kunststoff und der Außenhülse 103 aufgelöst werden kann. Die Schrumpfung vom Kunststoff nach dem Abkühlen kann durch eine Spritzgusskavität berücksichtigt werden.

Das in Fig. 3 dargestellte Verfahren kann analog zur Herstellung des zweiten Lagerendes 102 herangezogen werden.

Ein Vorteil des Herstellungsverfahrens ist, dass die Fertigungstoleranzen klein sind, sodass zwischen der Kunststoffgleitschicht und der Außenhülse 103 eine Kontaktfreiheit gewährleistet werden kann, wodurch auch die NVH-Anforderung erfüllt werden.

## Patentansprüche

1. Befestigungsschäkel (100) zur Befestigung einer Blattfeder an einem Fahrzeugaufbau eines Fahrzeugs, mit:
einem ersten Lagerende (101), welches an dem Fahrzeugaufbau befestigbar ist;
einem zweiten Lagerende (102), an welchem die Blattfeder lagerbar ist; und
einem Schäkelkörper (109), welcher das erste Lagerende (101) und das zweite Lagerende (102) verbindet,
wobei das erste Lagerende (101) eine Außenhülse (103) und eine Innenhülse (105) aufweist,
**dadurch gekennzeichnet, dass**
das erste Lagerende (101) ein hülsenförmiges Kunststoffgleitlager (107) aufweist, wobei das hülsenförmige Kunststoffgleitlager (107) in der Außenhülse (103) angeordnet und in der Außenhülse (103) gleitbar gelagert ist, und wobei die Innenhülse (105) mit dem hülsenförmigen Kunststoffgleitlager (107) fest verbunden ist.

2. Befestigungsschäkel (100) nach Anspruch 1, wobei das hülsenförmige Kunststoffgleitlager (107) durch eine einstückige Kunststoffhülse gebildet ist.

3. Befestigungsschäkel (100) nach Anspruch 1 oder 2, wobei an dem zweiten Lagerende (102) ein Elastomerlager für die Halterung der Blattfeder lagerbar ist, und wobei ein Elastizitätswert des hülsenförmigen Kunststoffgleitlagers (101) geringer als ein Elastizitätswert eines Elastomers des Elastomerlagers ist.

4. Befestigungsschäkel (100) nach einem der vorstehenden Ansprüche, wobei das hülsenförmige Kunststoffgleitlager (107) aus Kunststoff gebildet ist, welcher ein tribologisches Polymer enthält.

5. Befestigungsschäkel (100) nach einem der vorstehenden Ansprüche, wobei das hülsenförmige Kunststoffgleitlager (107) aus einem Faserverbundstoff gebildet ist, welcher ein Polymer, insbesondere ein tribologisches Polymer und Verstärkungsfasern enthält.

6. Befestigungsschäkel (100) nach einem der vorstehenden Ansprüche, wobei das hülsenförmige Kunststoffgleitlager (107) mit der Innenhülse (105), insbesondere mit einer Außenwandung der Innenhülse (105), stoffschlüssig verbunden ist.

7. Befestigungsschäkel (100) nach einem der vorstehenden Ansprüche, wobei die Außenhülse (103), insbesondere die Außenwandung der Außenhülse (103), fest mit dem Schäkelkörper (109) verbunden oder einteilig mit dem Schäkelkörper ausgebildet ist.

8. Befestigungsschäkel (100) nach einem der vorstehenden Ansprüche, wobei an dem zweiten Lagerende (102) ein Blattfederhalter (115) zur Halterung der Blattfeder angeordnet ist.

9. Befestigungsschäkel (100) nach einem der vorstehenden Ansprüche, wobei das zweite Lagerende (102) eine Lagerhülse aufweist, welche durch einen Lagerbolzen (123) durchsetzbar ist, oder wobei der Schäkelkörper (109) an dem zweiten Lagerende (102) einen ersten Schäkelsteg (109-1) und einen zweiten Schäkelsteg (109-2) aufweist, wobei der erste Schäkelsteg (109-1) und der zweite Schäkelsteg (109-2) jeweils einen Durchzug (111-1, 111-2) aufweisen, welcher durch einen Lagerbolzen durchsetzbar ist.

10. Befestigungsschäkel nach einem der vorstehenden Ansprüche, wobei das erste Lagerende (101) in einer Querrichtung der Blattfeder starr ist.

11. Blattfederanordnung mit:
einer Blattfeder (113); und
dem Befestigungsschäkel (100) nach einem der vorstehenden Ansprüche 1 bis 10, wobei ein Blattfederende an dem zweiten Lagerende (101) des Befestigungsschäkels (100) drehbar gelagert ist, und wobei das erste Lagerende (101) des Befestigungsschäkels (100) an einem Fahrzeugaufbau befestigt ist.

12. Blattfederanordnung nach Anspruch 11, wobei die Blattfeder an dem zweiten Lagerende (102) mittels eines Elastomerlagers befestigt ist.

13. Verfahren zum Herstellen eines Befestigungsschäkels zur Befestigung einer Blattfeder an einem Fahrzeugaufbau eines Fahrzeugs, mit:
Bereitstellen eines Grundschäkels mit einem ersten Lagerende (101) mit einer Außenhülse (103), einem zweiten Lagerende (102) und einem Schäkelkörper (109, 111), welcher das erste Lagerende (101) und das zweite Lagerende (102) verbindet;
Einführen einer Innenhülse (105) in die Außenhülse (103); und
Einspritzen eines Kunststoffs zwischen eine Außenwandung der Innenhülse (105) und eine Innenwandung der Außenhülse (103), um ein hülsenförmiges Kunststoffgleitlager (107) zu erzeugen.

14. Verfahren nach Anspruch 13, wobei die Außenhülse (103) oder der Grundschäkel vor oder nach dem Einführen der Innenhülse (105) in ein Kunststoffspritzwerkzeug eingelegt wird.

15. Verfahren nach Anspruch 13 oder 14, mit Auflösen einer Stoffverbindung zwischen der Innenwandung der Außenhülse (103) und dem hülsenförmigen Kunststoffgleitlager (107), um das hülsenförmige Kunststoffgleitlager (107) in der Außenhülse gleitbar zu lagern.

## Claims

1. Fastening shackle (100) for fastening a leaf spring to a vehicle body of a vehicle, with:
a first bearing end (101), which is fastenable to the vehicle body;
a second bearing end (102) at which the leaf spring is supportable; and
a shackle body (109), which connects the first bearing end (101) and the second bearing end (102),
wherein the first bearing end (101) has an outer sleeve (103) and an inner sleeve (105),
**characterized in that**
the first bearing end (101) has a sleeve-shaped plastic sliding bearing (107), wherein the sleeve-shaped plastic sliding bearing (107) is arranged in the outer sleeve (103) and is slidably mounted in the outer sleeve (103), and wherein the inner sleeve (105) is fixed to the sleeve-shaped plastic sliding bearing (107).

2. Fastening shackle (100) according to claim 1, wherein the sleeve-shaped plastic sliding bearing (107) is formed by a one-piece plastic sleeve.

3. Fastening shackle (100) according to claim 1 or 2, wherein at the second bearing end (102) an elastomeric bearing for holding the leaf spring is supportable, and wherein an elasticity value of the sleeve-shaped plastic sliding bearing (101) is less than an elasticity value of an elastomer of the elastomeric bearing.

4. Fastening shackle (100) according to any one of the preceding claims, wherein the sleeve-shaped plastic sliding bearing (107) is formed from plastic, which comprises a tribological polymer.

5. Fastening shackle (100) according to any one of the preceding claims, wherein the sleeve-shaped plastic sliding bearing (107) is formed from a fiber composite, which comprises a polymer, in particular a tribological polymer and reinforcing fibers.

6. Fastening shackle (100) according to any one of the preceding claims, wherein the sleeve-shaped plastic sliding bearing (107) is firmly bonded to the inner sleeve (105), in particular to an outer wall of the inner sleeve (105).

7. Fastening shackle (100) according to any one of the preceding claims, wherein the outer sleeve (103), in particular the outer wall of the outer sleeve (103), is fixed to the shackle body (109) or is formed with the shackle body in one piece.

8. Fastening shackle (100) according to any one of the preceding claims, wherein a leaf spring holder (115) for holding the leaf spring is arranged at the second bearing end (102).

9. Fastening shackle (100) according to any one of the preceding claims, wherein the second bearing end (102) has a bearing sleeve, which is penetratable by a bearing pin (123), or wherein the shackle body (109) at the second bearing end (102) has a first shackle web (109-1) and a second shackle web (109-2), wherein the first shackle web (109-1) and the second shackle web (109-2) each has a passage (111-1, 111-2), which is penetratable by a bearing pin.

10. Fastening shackle according to one of the preceding claims, wherein the first bearing end (101) is rigid in a transverse direction of the leaf spring.

11. Leaf spring arrangement with:
a leaf spring (113); and
a fastening shackle (100) according to one of the preceding claims 1 to 10, wherein a leaf spring end is rotatably mounted at the second bearing end (101) of the fastening shackle (100), and wherein the first bearing end (101) of the fastening shackle (100) is fastenable to a vehicle body.

12. Leaf spring arrangement according to claim 11, wherein the leaf spring is attached to the second bearing end (102) by means of an elastomer bearing.

13. A method for producing a fastening shackle for fastening a leaf spring to a vehicle body of a vehicle, comprising:
Providing a basic shackle with a first bearing end (101) with an outer sleeve (103), a second bearing end (102) and a shackle body (109, 111), which connects the first bearing end (101) and the second bearing end (102);
Inserting an inner sleeve (105) into the outer sleeve (103); and
Injecting a plastic between an outer wall of the inner sleeve (105) and an inner wall of the outer sleeve (103) to produce a sleeve-shaped plastic sliding bearing (107).

14. Method according to claim 13, wherein the outer sleeve (103) or the base shackle is inserted before or after the insertion of the inner sleeve (105) in a plastic injection mold.

15. Method according to claim 13 or 14, comprising dissolving a material connection between the inner wall of the outer sleeve (103) and the sleeve-shaped plastic sliding bearing (107) to slidably support the sleeve-shaped plastic sliding bearing (107) in the outer sleeve.

## Revendications

1. Jumelle de fixation (100) servant à la fixation d'un ressort à lames sur une carrosserie d'un véhicule, comportant :
une première extrémité de palier (101), laquelle peut être fixée à la carrosserie de véhicule ;
une deuxième extrémité de palier (102), sur laquelle le ressort à lames peut être monté ; et
un corps de jumelle (109), lequel relie la première extrémité de palier (101) et la deuxième extrémité de palier (102),
dans laquelle la première extrémité de palier (101) comprend une douille extérieure (103) et une douille intérieure (105), **caractérisée en ce que**
la première extrémité de palier (101) comprend un palier lisse en matière synthétique (107) en forme de douille, le palier lisse en matière synthétique (107) en forme de douille étant disposé dans la douille extérieure (103) et monté de manière glissante dans la douille extérieure (103), et la douille intérieure (105) étant reliée solidement au palier lisse en matière synthétique (107) en forme de douille.

2. Jumelle de fixation (100) selon la revendication 1, dans laquelle le palier lisse en matière synthétique (107) en forme de douille est formé par une douille en matière synthétique d'une seule pièce.

3. Jumelle de fixation (100) selon la revendication 1 ou 2, dans laquelle un palier en élastomère peut être monté au niveau de la deuxième extrémité de palier (102) pour le support du ressort à lames, et dans laquelle une valeur d'élasticité du palier lisse en matière synthétique (101) en forme de douille est inférieure à une valeur d'élasticité d'un élastomère du palier en élastomère.

4. Jumelle de fixation (100) selon l'une des revendications précédentes, dans laquelle le palier lisse en matière synthétique (107) en forme de douille est formé à partir d'une matière synthétique, laquelle contient un polymère tribologique.

5. Jumelle de fixation (100) selon l'une des revendications précédentes, dans laquelle le palier lisse en matière synthétique (107) en forme de douille est formé à partir d'un matériau composite renforcé par des fibres, lequel contient un polymère, en particulier un polymère tribologique et des fibres de renforcement.

6. Jumelle de fixation (100) selon l'une des revendications précédentes, dans laquelle le palier lisse en matière synthétique (107) en forme de douille est relié par liaison de matière à la douille intérieure (105), en particulier à une paroi extérieure de la douille intérieure (105).

7. Jumelle de fixation (100) selon l'une des revendications précédentes, dans laquelle la douille extérieure (103), en particulier la paroi extérieure de la douille extérieure (103), est reliée solidement au corps de jumelle (109) ou formée d'un seul tenant avec le corps de jumelle.

8. Jumelle de fixation (100) selon l'une des revendications précédentes, dans laquelle un support de ressort à lames (115) pour le support du ressort à lames est disposé au niveau de la deuxième extrémité de palier (102) .

9. Jumelle de fixation (100) selon l'une des revendications précédentes, dans laquelle la deuxième extrémité de palier (102) comprend une douille de palier, laquelle peut être traversée par un boulon de palier (123), ou dans laquelle le corps de jumelle (109) comprend une première âme de jumelle (109-1) et une deuxième âme de jumelle (109-2) au niveau de la deuxième extrémité de palier (102), dans laquelle la première âme de jumelle (109-1) et la deuxième âme de jumelle (109-2) comprennent respectivement un passage (111-1, 111-2), lequel peut être traversé par un boulon de palier.

10. Jumelle de fixation selon l'une des revendications précédentes, dans laquelle la première extrémité de palier (101) est rigide dans une direction transversale du ressort à lames.

11. Ensemble de ressort à lames comportant :
un ressort à lames (113) ; et
la jumelle de fixation (100) selon l'une des revendications précédentes 1 à 10, dans lequel une extrémité de ressort à lames est montée rotative au niveau de la deuxième extrémité de palier (101) de la jumelle de fixation (100), et dans lequel la première extrémité de palier (101) de la jumelle de fixation (100) est fixée à une carrosserie de véhicule.

12. Ensemble de ressort à lames selon la revendication 11, dans lequel le ressort à lames est fixé à la deuxième extrémité de palier (102) au moyen d'un palier en élastomère.

13. Procédé de fabrication d'une jumelle de fixation servant à la fixation d'un ressort à lames sur une carrosserie d'un véhicule, comportant :
la fourniture d'une jumelle de base dotée d'une première extrémité de palier (101) comprenant une douille extérieure (103), d'une deuxième extrémité de palier (102) et d'un corps de jumelle (109, 111), lequel relie la première extrémité de palier (101) et la deuxième extrémité de palier (102) ;
l'insertion d'une douille intérieure (105) dans la douille extérieure (103) ; et
l'injection d'une matière synthétique entre une paroi extérieure de la douille intérieure (105) et une paroi intérieure de la douille extérieure (103), afin de produire un palier lisse en matière synthétique (107) en forme de douille.

14. Procédé selon la revendication 13, dans lequel la douille extérieure (103) ou la jumelle de base est introduite dans un moule d'injection de matière synthétique avant ou après l'insertion de la douille intérieure (105).

15. Procédé selon la revendication 13 ou 14, comportant la libération d'une liaison de matière entre la paroi intérieure de la douille extérieure (103) et le palier lisse en matière synthétique (107) en forme de douille, afin de monter de manière glissante le palier lisse en matière synthétique (107) en forme de douille dans la douille extérieure.
